# EUROPÄISCHE PATENTSCHRIFT

(11) **EP 0 493 727 B1**
(45) Veröffentlichungstag und Bekanntmachung des Hinweises auf die Patenterteilung: **23.03.1994**
(21) Anmeldenummer: 91121346.0
(22) Anmeldetag: 11.12.1991
(51) Int. Cl.: C02F 3/28

(54) **Reaktor und Verfahren zur kontinuierlichen mechanischen und anaerob biologischen Reinigung feststoffhaltigen Abwassers**
Reactor and process for the continuous mechanical and anaerobic biological purification of waste water containing solids
Réacteur et procédé pour la purification mécanique et biologique anaerobie continue d'eau usée contenant des matières solides

(30) Priorität: 29.12.1990 DE 4042223
(43) Veröffentlichungstag der Anmeldung: 08.07.1992
(73) Patentinhaber: PWA INDUSTRIEPAPIER GmbH, 83064 Raubling (DE)
(72) Erfinder: Menges, Wilhelm, W-8204 Brannenburg (DE)
(74) Vertreter: Fuchs Mehler Weiss

(56) Entgegenhaltungen:
- DE-A- 2 920 978
- GB-A- 1 297 959
- US-A- 1 692 446

## Beschreibung

Die Erfindung betrifft einen Reaktor zur kontinuierlichen mechanischen und anaerob biologischen Reinigung feststoffhaltigen Abwassers nach dem Oberbegriff des Anspruchs 1. Insbesondere betrifft die Erfindung einen Reaktor, der die integrierte mechanische und anaerob biologische Reinigung sinkstoffhaltigen Abwassers erlaubt. weiterhin betrifft die Erfindung entsprechende Verfahren in erfindungsgemäßen Reaktoren.

Für die Abwasserreinigung sind im wesentlichen mechanische, biologische und chemische Verfahren bekannt. Die mechanische Abwasserreinigung dient der Ausscheidung von Sink- und Schwimmstoffen. Bei der biologischen Abwasserbehandlung wird besonders die Fähigkeit von Kleinstorganismen (vor allem Bakterien) ausgenutzt, organische Substanzen abzubauen und letzendlich aufgrund ihres speziellen Stoffwechsels in niedermolekulare Substanzen wie Kohlendioxid und Wasser - im aeroben Fall - und vorwiegend Methan und teilweise auch Schwefelwasserstoff und Kohlendioxid - im anaeroben Fall - umzuwandeln.

Der im Vergleich zur Aerobie relativ jungen anaeroben Abwasserreinigung von insbesondere Industrieabwässern kommt dabei im Laufe der letzten Jahre eine gesteigerte Bedeutung zu, da auf der einen Seite bei der anaeroben Reinigung keine Energie zugeführt werden muß und gleichzeitig energiereiches Biogas zur gefälligen Weiterverwendung anfällt und andererseites dank intensiver Forschung die Reaktortechnik auf dem Gebiet der Anaerobie beträchtlich verbessert wurde.

Unter den für die Anaerobie in Frage kommenden Reaktortypen ist der UASB-Reaktor ("Upflow-Anaerobic-Sludge-Blanket"), der in den Niederlanden um 1973 entwickelt wurde, der am häufigsten eingesetzte Typ.

Reaktoren diesen Typs, die beispielsweise aus der DE-B- 27 28 585 oder der DE-C 29 20 978 bekannt sind, weisen prinzipiell am Reaktorboden einen Zulauf bzw. eine Einströmvorrichtung auf, über die das Abwasser eingeleitet und verteilt wird. Weiterhin kann am Boden des Reaktors ein aus Bakterienmasse, sogenannten Pellets, bestehendes Fließbett oder auch Schlammbett angeordnet sein, durch welches das eingeleitete Abwasser vertikal nach oben geführt wird. Die Mischung dieses Pelletsbettes wird dabei einzig über die vom Biosubstrat bei der Reaktion erzeugten aufsteigenden Gasbläschen und den Abwasserstrom erreicht.

Im Kopfteil des Reaktors befindet sich ein Drei-Phasen-Separator. Mit diesem gelingt zunächst die Abtrennung der gebildeten Gasbläschen. Nach Abtrennung des Gases tritt eine Beruhigung des im chemischen Sauerstoffbedarf (CSB-Wert) verminderten Abwassers ein, so daß eine Sedimentation des Pelletsschlamms zurück in den Reaktorraum erfolgt und das weitgehend feststofffreie Wasser in Ablaufsammelrinnen zentral abgeführt wird.

Der CSB-Wert bzw. der chemische Sauerstoffbedarf ist ein Kennzeichen für die Belastung eines Abwassers. Der CSB-Wert ist der Bedarf an Sauerstoff, der benötigt wird, um im Abwasser enthaltene, im wesentlichen organische Stoffe abzubauen.

Die Gesetzgebung setzt für diese Werte heute enge Grenzen. Eine Methode zur Bestimmung des chemischen Sauerstoffbedarfs findet sich beispielsweise in dem Merkblatt X/2/76 "Bestimmung des chemischen Sauerstoffbedarfs (CSB_{Cr}) in Abwässern von Zellstoff- und Papierfabriken" des Vereins Zellcheming in Darmstadt.

Als CSB-Fracht eines Abwassers bezeichnet man die unter Sauerstoffverbrauch chemisch abbaubaren Stoffe, umgerechnet auf die Menge des für ihren Abbau benötigten Sauerstoffs.

Besonders wichtig beim Upflow-Verfahren ist die gleichmäßige Verteilung des zugeführten Abwassers über den Beckenboden und eine gute Drei-Phasen-Trennung im oberen Reaktorteil.

Der UASB-Reaktor ist allgemein zur Behandlung von Abwasser vorgesehen, welches bereits von groben mechanischen Verunreinigungen befreit ist. Beispielsweise können bei Abwässern einer Papierfabrik sedimentierbare Verunreinigungen in Form von Papierfüllstoffen und dergleichen, d. h. Materialien mineralischer Art, die spezifisch schwerer sind als Wasser, vorliegen.

Bei den bisher eingesetzten UASB-Reaktoren tritt jedoch das Problem auf, daß Abwässer, die neben einer Belastung mit gelösten Stoffen, Schwimmstoffen und Schwebstoffen, auch durch oben genannte Sinkstoffe verunreinigt sind, wobei diese Sinkstoffe im wesentlichen durch die Anaerobie nicht abgebaut werden können, zum Versagen einer kontinuierlichen Reaktortechnik führen. Zwar kann das biologisch aktive Fließbett prinzipiell, ebenso wie die Pelletsschlammschicht darüber, eine gewisse Sinkstoffmenge ohne wesentliche Leistungsbeeinträchtigung aufnehmen, doch in einem kontinuierlichen Reaktor kann die Ansammlung von Sinkstoffen zu einer Desaktivierung der Pellets aufgrund einer Verkleinerung bzw. Blockade der wirksamen Oberfläche der Biomasse führen.

Die Zufuhr von Sinkstoffen könnte zwar verringert oder unterbunden werden, indem man die belasteten Abwässer vor Einströmung in die anaerobe Reinigungsstufe einer weiteren mechanischen Trennung unterzieht. Als Aggregat für solche Trennungen, mit welchem solche Grobreinigungen durchgeführt werden können, kommen beispielsweise separate Abscheidungsbecken oder sogenannte Trichter-Stoffänger in Frage, wie sie auch in der Papierindustrie zur Grobreinigung von Wässern üblich sind. Doch ist diese Vorgehensweise in jedem Fall technisch und verfahrensökonomisch aufwendiger als etwa eine integrierte anaerobe und gleichzeitige mechanische Abwasserreinigung.

Deswegen liegt der Erfindung die Aufgabe zugrunde, einen anaeroben UASB-Reaktor nach dem Stand der Technik so weiterzubilden, daß eine integrierte mechanische und biologische Reinigung feststoffhaltigen insbesondere sinkstoffhaltigen Abwassers ermöglicht ist.

Eine weitere Aufgabe der Erfindung besteht darin, ein Verfahren für die mechanische und anaerob biologische Reinigung feststoffhaltigen insbesondere sinkstoffhaltigen Abwassers anzugeben, daß die kontinuierliche Arbeitsweise in einem erfindungsgemäßen Reaktor erlaubt.

Gelöst werden diese Aufgaben durch einen Reaktor mit den Kennzeichen des Anspruch 1, bzw. durch ein Verfahren nach Anspruch 22.

Vorteilhafte Ausführungsformen des Reaktors sowie des Verfahrens unter Verwendung des erfindungsgemäßen Reaktors werden in den abhängigen Unteransprüchen unter Schutz gestellt.

Insbesondere dadurch, daß man zwischen Reaktorzulauf und Reaktorüberlauf eine das Reaktorinnere in eine überstehende Reaktionszone und eine unterhalb befindliche Beruhigungszone teilende Trennvorrichtung anordnet, gelingt die frühzeitige Sedimentation von Sinkstoffen im Reaktor und dadurch die Abtrennung der Sinkstoffe vom Abwasser, den gelösten Stoffen, sowie den Schwimm- und Schwebstoffen in einem einzigen Reaktor. Erst von der Hauptsinkstoffmenge befreit kommt das Abwasser in Kontakt mit dem Biosubstrat.

Die zur Teilung des Reaktors, der allgemein jede geeignete äußere Form aufweisen kann, beispielsweise rechteckig oder auch zylindrisch, bevorzugt jedoch turmartig ausgebildet ist, vorgesehene Trennvorrichtung ist bevorzugt im unteren Teil des Reaktors bzw. Reaktorturms angeordnet.

Dabei ist sie so auszulegen, daß das Abwasser die Trennvorrichtung grundsätzlich in beide Richtungen, d.h. von der Beruhigungszone in die Reaktionszone und auch umgekehrt passieren kann. Aufgrund der Geometrie und der Strömungsverhältnisse ist der Weg in die Reaktionszone bevorzugt, so daß im Regelfall von einem vernachlässigbaren Anteil von aus der Reaktionszone in die Beruhigungszone zurückströmendem Abwasser gesprochen werden kann.

Weiterhin unterbindet die Trennvorrichtung durch ihre spezielle Konstruktion weitestgehend den Sinkstoffaustausch zwischen Beruhigungs- und Reaktionszone dadurch, daß sie für Sinkstoffe in beiden möglichen Richtungen im wesentlichen unpassierbar ausgelegt ist.

In zweckmäßiger Ausführungsform dient ein Zwischenboden mit Durchbrechungen bzw. Öffnungen als Trennvorrichtung, wobei es sich beispielsweise um einen Siebboden handeln kann. Dieser Zwischenboden kann in bevorzugter Ausführungsform direkt mit einem Zulauf kombiniert sein bzw. ein Einströmsystem aufweisen, dessen Einströmaggregate beispielweise unterhalb oder in korrespondierenden Öffnungen im Zwischenboden angeordnet sind. In bevorzugter Ausführungsform kann ein Siebboden nur von einem Einströmungs-Rohrnetz mit entsprechend größeren Öffnungen als die Sieböffnungen durchbrochen sein.

Bei diesen Ausführungsformen des Zwischenbodens ist jedoch besonders darauf zu achten, daß bei Zufuhr bzw. Einströmung des Abwassers keine übermäßige Strömung bzw. keine Turbulenzen auftreten, so daß eine ausreichende Sedimentation der Sinkstoffe ohne Mitreißen in die Reaktionszone gewährleistet bleibt.

Beispielsweise kann zu diesem Zweck der Zwischenboden in Form eines hohlen Doppelwandbodens ausgeführt sein, in dessen Hohlraum die Einströmung des Abwassers geschieht. Ähnliches läßt sich aber auch durch die Anordnung zweier getrennter Zwischenböden in geringem Abstand zueinander erreichen.

Weiterhin bevorzugt ist der Einsatz von speziellen Zwischenböden, wie beispielsweise Glockenböden, die Stutzen zum Einströmen aufweisen, die jeweils mit Glocken überstülpt sind, so daß Abwasser hindurchtreten kann, Sinkstoffe jedoch im wesentlichen zurückgehalten werden.

Ein im Reaktor eingebauter Zwischenboden kann prinzipiell aus jedem geeigneten, gegenüber dem Abwasser und den weiteren im Reaktor befindlichen Stoffen, inerten Material gefertigt sein. Beispielsweise kommen in Frage Stähle, Edelstähle,Metalle, Legierungen, Kunststoffe, Gläser, Keramiken, Glaskeramik, Verbundwerkstoffe, beschichtete Materialien etc.

Ein am erfindungsgemäßen Reaktor einsetzbares Einströmsystem besteht wie bereits angedeutet im einfachsten Fall aus einem Rohrleitungssystem, das in korrespondierenden Öffnungen eines entsprechenden Zwischenbodens bzw. in der Umgebung eines Zwischenbodens münden kann.

Bevorzugt ist jedoch ein zweisträngiges Einströmsystem. Ein erster Strang eines solchen Rohrsystems kann die Öffnungen eines Zwischenbodens anströmen. Ein Abzweigstrang des Einströmsystems kann unterhalb des ersten Stranges, näher am Reaktorboden angeordnet sein. Vorteilhaft sind die beiden Stränge separat anströmbar sowie ansteuerbar, z.B. über geeignete Ventilsteuerungen, die mechanischer, elektrischer oder elektromagnetischer Art sein können. Weiterhin zweckmäßig sind beide Stränge nach der Verzweigung, d. h. nach der Trennung des Hauptabwasserzufuhrrohres in zwei Rohrleitungen und nach Anordnung entsprechender Ventile in jedem Strang, durch eine Querverbindung, z.B. ein Rohr kleineren Durchmessers in Kontakt.

Weiterhin ist es vorteilhaft möglich an jedem der beiden Stränge, beispielsweise im Bereiche der Ventile, die auch als einfache Schieber ausgebildet sein können, ein kleines Nebenrohr anstatt des Strangverbindungsrohres vorzusehen, das um die jeweiligen Ventile bzw. Schieber herumgeführt ist, wodurch jeweils ein Restzulauf gewährleistet wird.

Der Sinn einer solchen Ausbildung des Einströmsystems besteht im wesentlichen darin, eine Möglichkeit zu schaffen, gewisse Sinkstoffe bzw. Sedimente in die Reaktionszone einzuleiten, andere aber in die Beruhigungszone des Reaktors einzuleiten. Diese Anordnung der Rohrleitungen kann beispielsweise besonders vorteilhaft sein, wenn angestrebt wird, Pelletsschlamm in die Reaktionszone ein- bzw. zurückzuleiten, ohne daß er in der Beruhigungszone absinkt bzw. sedimentiert. Dadurch wird auch in einem solchen Fall eine kontinuierliche Reaktorbetriebsweise aufrecht erhalten.

Ein weiterer Vorteil des zweisträngigen Einströmsystems besteht darin, daß eine bessere Durchströmung des Reaktors zur Vermeidung schlecht oder wenig durchströmter Reaktorbereiche erreichbar wird.

Zusätzliche zweckmäßige Ausgestaltungen des Einströmsystems sind beispielsweise eine Trichtereinströmung, die gegebenenfalls mit Innenring ausgestattet sein kann, sowie Leitungsrohre des Einströmsystems, die die gesamte Reaktorbreite, bzw. den gesamten Reaktorquerschnitt durchmessen, so daß an dem der Einströmseite gegnüberliegenden Ende außerhalb des Reaktorinnenraums von außen zugängige Stutzen angeordnet sein können. Diese Stutzen können zweckmäßig zur leichten Reinigung des Einströmrohrsystems dienen, wobei die Reinigung mit eingeführten Bürsten erfolgen kann.

Die vorwiegend unterhalb der Trennvorrichtung angeordnete Beruhigungszone ist vorteilhaft in einer Sinkstoffabscheidungsvorrichtung angeordnet, die zweckmäßig eine trichterförmige Geometrie aufweist, wobei der Trichter sich nach unten verjüngen kann. Dieses konisch zulaufende Teil kann einstückig mit dem Reaktor ausgebildet sein, kann aber auch über Zwischen- oder Übergangsstücke mit dem Reaktor verbunden sein. Es muß nur sichergestellt sein, daß sich sedimentierende Sinkstoffe in der Trichterspitze sammeln können.

Dazu kann z.B. wesentlich sein, daß die Zufuhr des sinkstoffhaltigen Abwassers im oberen Bereich der Beruhigungszone durch geeignet langsames Einströmen erfolgt. Unter Vermeidung von Durchwirbelung und unter Einfluß der Schwerkraft sedimentieren so auch Sinkstoffe, die nur einen geringen Dichteunterschied zum Abwasser aufweisen. Wie bereits erwähnt ist es jedoch auch möglich, das Abwasser unterhalb näher an der Trichterspitze einzuströmen, etwa bei Verwendung einer Zweistrangeinströmung.

Die Sinkstoffabscheidungsvorrichtung weist wiederum bevorzugt eine Sinkstoffsammelvorrichtung auf, die beispielsweise mit dem oben erwähnten trichterförmigen Teil identisch ist, sowie eine Sinkstoffablaßvorrichtung.

Diese Sinkstoffablaßvorrichtung kann beispielsweise in einer einfachen Rohrverbindung, die Ventile zur Steuerung aufweisen kann, mit der Sinkstoffsammeleinrichtung bestehen. Durch einfaches Öffnen oder Schließen der Ventile kann es dann möglich sein, den Sinkstoff unter Einfluß der Schwerkraft und des hydrostatischen Druckes der überstehenden Wassersäule aus dem Reaktor zu entfernen. Zweckmäßig ist dazu der ventilsteuerbaren Rohrverbindung jedoch mindestens eine Pumpe zum getakteten Abziehen der Sinkstoffe nachgeschaltet.

Bevorzugt ist außerdem eine Verbindung zwischen ventilsteuerbarer Rohrverbindung und Einströmsystem, bsp. durch ein Verbindungsrohr kleineren Durchmessers, durch das ein Druckausgleich beim Abziehen der Sinkstoffe möglich ist.

Im oberen Bereich des Reaktors bzw. des Reaktorturmes befindet sich vorteilhaft eine Gasabscheidungseinrichtung, die einen Gassammeldom sowie eine Gasablaßvorrichtung aufweisen kann.

Aufsteigendes Biogas kann im Sammeldom gesammelt und über die Gasablaßvorrichtung abgelassen werden. Dabei ist es bevorzugt, daß die Gasablaßvorrichtung eine Rohrverbindung mit dem Gassammeldom aufweist, die über mindestens ein Ventil steuerbar ist.

Weiterhin bevorzugt ist die Ausbildung der Gasabscheidungsvorrichtung in Form eines Drei-Phasen-Separators am Reaktoroberteil, wie sie beispielsweise aus der DE-B- 27 28 585 bekannt ist. Hierbei kann einerseits das Biogas von dem in den Reaktorraum zurückgelangenden Schlamm abgetrennt werden und andererseits an den Rändern eine Art Überlauf ausgebildet sein, mittels dessen im Reaktor aufgestiegenes Abwasser samt eventuell vorhandener Schwimm- bzw. Schwebstoffe ablaufen kann.

Der Überlauf kann in einem einfachen Fall aus einer rund um das obere Ende des Reaktorturms umlaufenden Auffangrinne bestehen bzw. durch ein Überlaufwehr ausgebildet sein, woran Rohrleitungen zum Ablauf des Abwassers angeschlossen sind. Bevorzugt sind auch diese Ablaufrohrleitungen ventilsteuerbar und, wie das gesamte Reaktorsystem, luftabgeschlossen.

Dabei ist weiterhin darauf zu achten, daß der Ablauf so ausgelegt ist, daß speziell Schwimm- bzw. Schwebestoffe oder auch Anteile des Bioschlamms, die mitgerissen werden, abführbar sind. Es kann vorteilhaft sein, beispielsweise Einbauten, die als Überlaufwehr ausgebildet sind, tiefer anzusetzen als beim bekannten Drei-Phasen-Separator des UASB-Reaktors bzw. ganz wegzulassen, um ein besseres Übertreiben einer erhöhten Menge an Schwimmstoffen zu gestatten.

Weiterhin kann der Ablauf/Überlauf über eine externe Trennstufe mit dem im unteren Reaktorbereich angeordneten Zulauf verbunden sein. Diese Trennstufe, die beispielsweise ein Zyklon oder ein Abscheidungsbecken aufweist, kann zur nachträglichen mechanischen Reinigung des abgelaufenen Abwassers eingesetzt werden. Bevorzugt ist diese externe Trennstufe ebenfalls luftabgeschlossen ausgeführt, so daß es nicht zur Inaktivierung der eventuell mitgerissenen wertvollen Biomasse kommt. Zur Rückführung des Pelletsschlammes aus der externen Trennstufe können weiterhin geeignete Mittel vorgesehen sein, besonders bevorzugt ist in diesem Zusammenhang eine Verbindung mit dem ersten Strang eines Zweistrangeinströmsystems, so daß ab und an Biomasse in den Reaktor rückführbar ist.

Der erfindungsgemäße Reaktor wird bevorzugt in einem kontinuierlichen mechanischen und anaerob biologischen Reinigungsverfahren für feststoffhaltige Abwässer eingesetzt. Wesentliche Verfahrensschritte dabei sind sanfte und gleichmäßige Einströmung des feststoffhaltigen, insbesondere sinkstoffhaltigen Abwassers in die Beruhigungszone des Reaktors, so daß die Sinkstoffe sedimentieren können; die Reaktion des Abwassers, welches beispielsweise gelöste Verunreinigungen, Schwebstoffe oder Schwimmstoffe enthalten kann, mit in der Reaktionszone des Reaktors befindlicher Biomasse, wobei Biomasse, Schweb- und Schwimmstoffe, die von der Biomasse nicht umgesetzt werden, flotieren, also im Reaktor nach oben steigen, wobei gleichzeitig durch Reaktion der Biomasse mit Wasserverunreinigungen der Gehalt an Verunreinigungen, ausgedrückt durch den chemischen Sauerstoffbedarf des Abwassers, verringert wird; Abtrennung einer wesentlichen Menge der Biomasse nach der Flotation durch Trennung von der Flotte (beispielsweise durch Sedimentation); Regeneration der Biomasse und letztlich Isolierung der Flotte mit dem im CSB-Wert verminderten Abwasser.

Zweckmäßig wird der pH-Wert des Abwassers vor Einströmung in den Reaktor durch Zusatz von sauren oder basischen Substanzen auf einen für die Biomasse günstigen pH-Wert eingestellt. Neben der Neutralisation bzw. Pufferung des Abwassers kann es vorteilhaft sein, zur Aufrechterhaltung der Reaktivität der Biomasse entsprechende geeignete Nährstoffe bzw. Nährsalze für die Mikroorganismen zuzugeben.

Weiterhin nicht unerheblich für eine günstige Verfahrensführung ist die Temperatur des Abwassers, wobei diese je nach äußeren Parametern bevorzugt auf Werte zwischen 25°C und 40°C eingestellt wird.

Um eine kontinuierliche Reaktorführung sicherzustellen, ist es vorteilhaft, die sedimentierten Sinkstoffe von Zeit zu Zeit aus dem Reaktorinneren zu entfernen. Dies kann ohne Unterbrechung des Reaktionsprozesses geschehen, indem man beispielsweise eine Pumpe einsetzt, die über eine mit Ventilen ausgerüstete Rohrleitung die sich absetzenden Stoffe an der Unterseite des Reaktors periodisch abzieht. Es ist jedoch auch möglich, die Sinkstoffe einfach, wie bei einem großen Scheidetrichter, abzulassen, ohne eine Pumpe zu verwenden. Wird eine Pumpe in Verbindung mit einem Zweistrangeinströmsystem eingesetzt, so wird zweckmäßig vor einem getakteten Sedimentstoff-Abzug der Trichtereinlauf zur Beruhigung in der Spitze mit einer Zeitschaltung gesteuert eine angemessene Zeitspanne nicht angefahren, bzw. vom entsprechenden Zuleitungsrohr nur wenig gespeist.

Da der Sinkstoffaustausch zwischen Beruhigungszone und Reaktionszone durch Verwendung einer Trennvorrichtung weitgehend eingeschränkt ist, strömen vorwiegend nur Abwasser, Schweb- und Schwimmstoffe in die Reaktionszone und treffen dort und auf die reaktive Biomasse.

Als Biomasse kommen bevorzugt sog. Pellets zum Einsatz. Hierbei handelt es sich um Mikroorganismen,die makroskopisch in Form von schwarzem Schlamm auftreten bzw. ein "kaviarähnliches" Erscheinungsbild aufweisen. Diese Pellets haben im allgemeinen ein größeres spezifisches Gewicht als Abwasser und sinken deshalb auf einen als Trennvorrichtung dienenden Zwischenboden im Reaktor, d.h. der Reaktor weist üblicherweise eine mehr oder minder dicke Schicht aus Pelletsschlamm auf. Der Zustand der empfindlichen Biomasse im Reaktor kann von Zeit zu Zeit kontrolliert werden. Dazu kann man aus in verschiedenen Höhen relativ zum Reaktorturm angeordneten Probenahmenstutzen Proben ziehen und auf ihren Zustand untersuchen.

Die Pellets, die anfänglich auf dem Zwischenboden oberhalb der Beruhigungszone liegen, beginnen bei Zufuhr von geeignetem Abwasser schnell mit der Umwandlung der Verunreinigungen des Abwassers in gasförmige Substanzen, vorwiegend Methan. Dabei werden Schweb-/Schwimmstoffe je nach Herkunft und Beschaffenheit nur teilweise oder aber überhaupt nicht angegriffen oder umgesetzt.

Das sich bildende Gas steigt teilweise auf oder verleiht den Pellets eine Gashülle, so daß die Pellets-Gasgebilde langsam leichter werden und im Abwasser nach oben steigen. Durch diese vertikale Aufwärtsströmung wird gleichzeitig ein sanfte Durchmischung des gesamten Reaktorinhalts gewährleistet. Ebenso können Schwimm- und Schwebstoffe je nach Anhaftungsfähigkeit für Gase auch zusätzlichen Auftrieb erhalten, wodurch sich auch deren Flotation beschleunigen kann.

An der Abwasseroberfläche angekommen, geben die Pellets bevorzugt ihre Gashülle ab, es kommt zu einer Beruhigung der Bewegung und sie sinken aufgrund ihrer Dichte nach unten, jedoch nur so weit, bis sie von der Trennvorrichtung auf dem Zwischenboden bzw. der darauf befindlichen Pelletsschicht, zurückgehalten werden. Hierbei ist dank der leichten, vertikal aufwärts gerichteten Strömung des zugeführten Abwassers sowie der speziellen Konstruktion der Trennvorrichtung ein Durchsinken der Pellets in die unter der Trennvorrichtung befindliche Beruhigungszone annähernd ausgeschlossen. Das an der Oberfläche des Abwassers abgegebene Gas kann mit einer Gasabscheidungseinrichtung oder einem Drei-Phasen-Separator gesammelt und abgelassen werden.

Im Verhältnis zum zuströmenden Abwasser kann Abwasser aus dem Reaktor entfernt werden. Dies kann über einen am oberen Ende des Reaktorturms angeordneten Überlauf geschehen, wobei z.B. durch den Drei-Phasen-Separator gewährleistet wird, daß die Hauptmenge Pellets als auch die Hauptgasmenge nicht mit dem überlaufenden Abwasser entweichen können. Eventuell mitgerissene Pellets stellen keine Probleme für den Prozeß dar, ebenso wie beispielsweise nicht umgesetzte Schwimm- oder Schwebstoffe, die zunächst mit dem im CSB-Wert deutlich verminderten Abwasser überlaufen können. Um ein besseres Übertreiben der ankommenden Stoffe zu gestatten, kann vorteilhafter Weise ein Rückwasserspritzrohr, das am Überlauf angesetzt ist, für freien Überluf und ungestörten Ablauf der Schwimmstoffe und der Pellets sorgen.

Das überlaufende Abwasser zeigt dabei im Vergleich zum zulaufenden Abwasser nach Durchlauf der Reaktorreinigungsstufe einen um 50 bis 90 % verringerten CSB-Wert, bevorzugt 60 bis 85 % verringerten CSB-Wert und besonders bevorzugt einen 70 bis 80 % verringerten CSB-Wert.

Gleichzeitig wird durch den Prozeß Biogas, das eine kostengünstige Energiequelle darstellt, gewonnen, so daß die Gesamtenergiebilanz des Prozesses einen Energieüberschuß aufweisen kann.

Das überlaufende, im CSB-Wert verminderte, schwebstoff-, schwimmstoff- und evtl. pelletshaltige Abwasser, kann prinzipiell auf vielfältige Weise im Prozeß weiterverwendet werden. Zum einen ist es möglich, daß man es erneut dem Reaktoreinlauf zuführt und so einer wiederholten Reinigungsstufe im selben Reaktor unterzieht. Dabei ist natürlich darauf zu achten, daß die Anaerobie des Vorgangs während des Rückführens in den Reaktor aufrechterhalten bleibt.

Zwischen Überlauf und erneuter Einströmung in den Reaktor kann man aber auch das Abwasser einer weiteren externen Trennstufe unterziehen, wobei es sich vorwiegend um eine mechanische Trennung in einem Zyklonen oder in einem Abscheidungsbecken handelt, so daß es möglich wird, mitgerissene Pellets als Sinkstoffe von dem schwebstoff- und/oder schwimmstoffhaltigen im CSB-Wert verminderten Abwasser abzutrennen. Je nach Bedarf kann man das von den Pellets endgültig befreite, schweb- und schwimmstoffhaltige, CSB-Wert-verminderte Abwasser in den Reaktor zurückführen bzw. zur weiteren Verwendung in einem übergeordneten Prozeß vorsehen. Ebenso ist nach Durchlaufen der zweiten externen Trennstufe ein Einschleusen von Pelletsmaterial problemlos möglich, wobei jedoch darauf geachtet werden muß, daß beispielsweise über eine weitere Zuführvorrichtung die Pellets in die Reaktionszone des Reaktors gelangen.

Nachfolgend wird ein Ausführungsbeispiel der Erfindung unter Bezugnahme auf die Figuren erläutert. Damit soll der Umfang der Erfindung jedoch in keinster Weise nur auf diese Ausführungsbeispiele beschränkt sein.

Es zeigen:
- Figur 1: die schematische Darstellung einer Ausführungsform des erfindungsgemäßen Reaktors mit Andeutung der wichtigsten Einrichtungen für die Ver- und Entsorgung des Reaktors;und
- Figur 2: eine analoge Darstellung einer weiteren erfindungsgemäßen Ausführungsform.

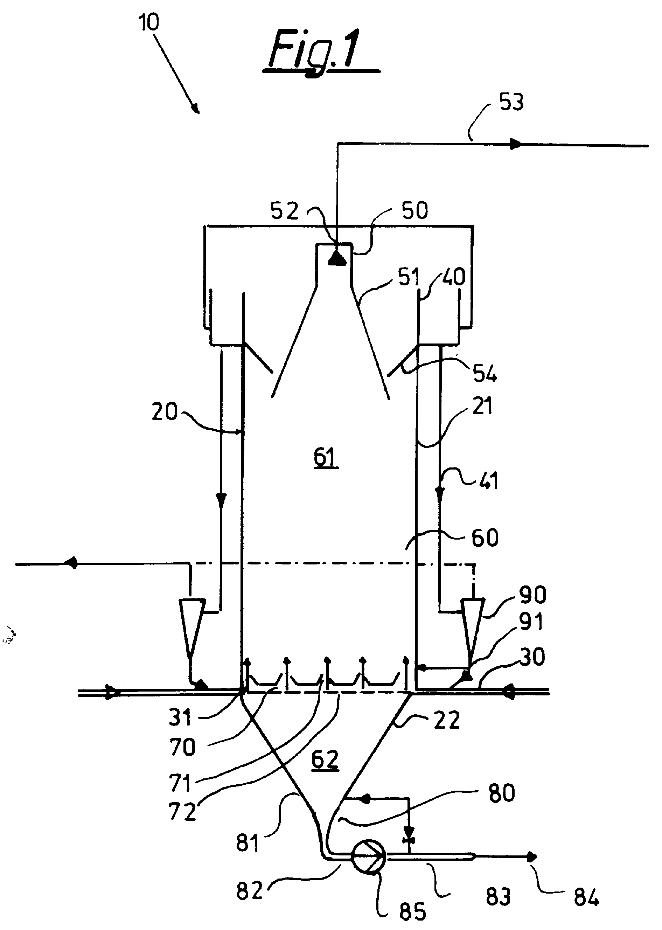

Der in Figur 1 gezeigte Reaktor 10 weist einen im wesentlichen röhrenförmigen Reaktorturm 20 auf. Dieser zeigt einen oberen Abschnitt 21 von im wesentlichen zylindrischer Form, welcher im gezeigten Ausführungsbeispiel etwa 80 % der Gesamthöhe des Reaktors entspricht, während er gleichzeitig einen sich konisch verjüngenden unteren Abschnitt 22 zeigt, wodurch dieser Abschnitt die Form eines Trichters aufweist. Die beiden Reaktorabschnitte 21 und 22 sind im Beispiel durch eine Trennvorrichtung 70 getrennt. Diese ist etwa am Übergang der beiden Reaktorabschnitte 21,22 angeordnet; die Anordnung der Trennvorrichtung 70 ist jedoch nicht auf diese Stelle beschränkt, allerdings ist diese Stelle zur Anordnung der Trennvorrichtung 70 bevorzugt.

Durch die Trennvorrichtung 70 wird das Reaktorinnere 60 in eine Reaktionszone 61 und eine Beruhigungszone 62 getrennt. Dabei entspricht im gezeigten Ausführungsbeispiel aufgrund der Anordnung der Trennvorrichtung 70 die Reaktionszone 61 im wesentlichen dem oberen Reaktorabschnitt 21 und die Beruhigungszone 62 entspricht im wesentlichen dem unteren Reaktorabschnitt 22.

Die Trennvorrichtung 70 ist im Ausführungsbeispiel rechtwinklig zur Längsachse des Reaktorturms 20 angeordnet und erfüllt dabei zur Teilung des Reaktorturms 20 dessen entsprechendes Innenflächensegment. Dazu ist die Trennvorrichtung 70 bevorzugt wie dargestellt als Zwischenboden 72 ausgeführt, welcher Durchbrechungen 71 aufweist. Diese sind als Öffnungen zu erkennen, die sich zur Reaktionszone hin verjüngen, es kommen jedoch weiterhin alle geeigneten Ausführungen für die Durchbrechungen in Frage, die ein Durchlassen des Abwassers ermöglichen und ein Durchlassen der Sinkstoffe verhindern.

In unmitelbarer Umgebung der axialen Anordnung des Zwischenbodens 72 ist am Reaktor 20 ein Abwasserzulauf 30 angeordnet. Dieser Zulauf 30 weist eine Einströmeinrichtung 31 auf, die z. B. nicht näher dargestellte Düsen aufweisen kann, die in oder unterhalb den Durchbrechungen 71 im Zwischenboden 72 münden können.

Weiterhin ist am unteren Reaktorabschnitt 22 eine Sinkstoffabscheidungseinrichtung 80 angeordnet, die eine Sinkstoffsammelvorrichtung 81 und eine Sinkstoffablaßvorrichtung 82 aufweist. Die Sinkstoffsammeleinrichtung 81 entspricht im einfachsten Fall dem konisch zulaufenden unteren Reaktorabschnitt 22, während die Sinstoffablaßvorrichtung 82 vorteilhaft am tiefsten Punkt oder zumindest in dessen Umgebung angeordnet ist und eine Rohrverbindung 83 mit der Stickstoffsammelvorrichtung 81 zeigt. Diese kann durch das Ventil 85 geschlossen und geöffnet werden. Das Ablaßen der Sinkstoffe kann durch eine der ventilsteuerbaren Rohrverbindung 83 nachgeordnete nicht näher dargestellte Pumpe 84 unterstützt sein.

In axialer Richtung nach oben schließt sich an die Beruhigungszone 62 die Reaktionszone 61 an, die am oberen Abschnitt des Reaktorturms 20 in einer nur im Prinzip, ohne genaue Einzelheiten dargestellten Gasabscheidungseinrichtung 50 endet. Die hier angedeutete Gasabscheidungseinrichtung 50 weist eine Gassammelvorrichtung 51 auf, sowie oberhalb des tiefsten Punktes der Wand des Gassammeldoms 51 an der Reaktorinnenwand in Umfangsrichtung sich schräg abwärts, radial nach innen erstreckende Rückhaltevorrichtungen 54, beispielsweise wie dargestellt in Form eines nach innen schräg stehenden umlaufenden Kragens. Dieser wirkt mit der Gassammeldomwand und weiteren geeigneten Vorrichtungen, die nicht näher dargestellt sind, zum Zurückhalten von Gas und auch Schwimm- oder Schwebstofen zusammen.

Weiterhin weist der Gassammeldom 51 in seinem oberen Bereich eine Verbindung mit einer Gasablaßvorrichtung 52 auf, wobei die Verbindung bevorzugt eine ventilsteuerbare Rohrverbindung 53 ist.

Am oberen Ende an der Außenseite des Reaktorturms 20 ist weiterhin ein Überlauf 40 angeordnet, der z. B. eine außen umlaufende Rinne oder ähnliches sein kann. Am Überlauf 40 ist eine weitere ventilsteuerbare Rohrverbindung 41 vorgesehen, die in eine externe Trennstufe 90 mündet. Diese Trennstufe 90 ist bevorzugt ein Zyklon oder ähnliches. Die Trennstufe 90 ist weiterhin vorteilhaft mit einer Einströmeinrichtung 31 oder einer zusätzlichen Rückführeinrichtung 91 verbunden, wobei die Rückführeinrichtung 91 die Einschleusung von Material aus der externen Trennstufe 90 in den Reaktor, z.B. über ventilsteuerbare Rohrleitungen gestattet.

Weiterhin ist für die Gasabscheidungseinrichtung bevorzugt ein z.B. in der DE-B- 27 28 585 oder auch in der DE-C 29 20 978 eingehend beschriebener Drei-Phasen-Separator mit entsprechenden Modifikationen vorsehbar, bei dem z. B. über Gasablenkvorrichtungen die angestrebte Trennung des Abwassers in Gas, Wasser und Sinkstoff erlaubt wird. Diese bekannten Einrichtungen sind wie bereits erwähnt an die speziellen Erfordernisse anpassbar.

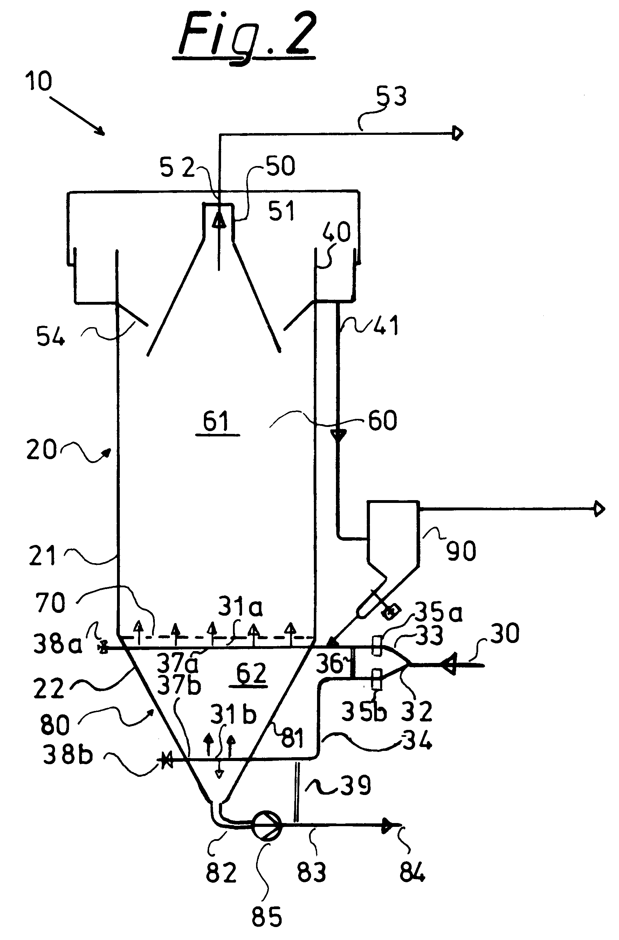

In Figur 2 ist eine weitere erfindungsgemäße Ausführungsform des Einströmsystems aus Zulauf 30 und Einströmeinrichtung 31, sowie des entsprechenden Reaktorbereichs erläutert. Dieser Darstellung kann man entnehmen, daß der Zulauf 30 in Art eines zweisträngigen Zufuhrsystems 32 ausgebildet ist. Der erste Strang 33 mündet in einer ersten Einströmeinrichtung 31a, der zweite Strang 34 in einer zweiten Einströmeinrichtung 31b. Beide Stränge 33,34 werden von einem Zulaufrohr 30 gespeist und sind jeweils durch Ventile 35a und 35b steuerbar, denen in Einströmrichtung ein Verbindungsrohr 36 nachgeordnet ist. Die Einströmeinrichtungen 31a, 31b sind im wesentlichen analog zur Einströmeinrichtung 31 ausgebildet, jedoch mit dem Unterschied, daß die Einströmrohre 37a,b der Einströmeinrichtungen 31a,b den Reaktorinnenraum 60 in horizontaler Richtung durchqueren und die durch die Reaktorwand durchtretenden Enden 38a,b mit verschließbaren Öffnungen, bzw. Stutzen versehen sind, die zu Reinigungszwecken dienen.

Der zweite Strang 34 weist weiterhin eine Rohrverbindung 39 zur Sinkstoffablaßvorrichtung 82, insbesondere zum Rohr 83 auf, wodurch ein Druckausgleich erleichtert wird. Der erste Strang 33 ist mit der externen Trennstufe 90, im gezeigten Beispiel als Pelletsabscheider ausgeführt, in Verbindung, über welche bei Bedarf Pellets in die Reaktionszone 61 des Reaktors 10 rückführbar sind. Das Rohr 36 dient dazu, das Zusetzen der nicht näher gezeigten Einströmdüsen der Einströmeinrichtung 31,31a,31b zu verhindern, wenn Feststoffe zurückdrängen, in dem Fall, daß nur ein Strang 33 oder 34 angefahren wird. Wenn Beispielsweise der Strang 34 mit Abwasser beaufschlagt wird, kann dadurch aus Strang 33 kein Material zurückdrängen.

Die beschriebenen Ausführungsformen des Reaktors ermöglichen unter anderem die vorteilhafte Durchführung des erfindungsgemäßen Verfahrens. Weitere Ausführungsformen des Reaktors, sowie des erfindungsgemäßen Verfahrens ergeben sich aus den folgenden Patentansprüchen.

### Bezugszeichenliste

- 10: Reaktor

- 20: Reaktorturm
- 21: oberer zylindrischer Abschnitt
- 22: unterer trichterförmiger Abschnitt

- 30: Zulauf
- 31: Einströmeinrichtung
- 31a: Einströmeinrichtung
- 31b: Einströmeinrichtung
- 32: Zweistrangzufuhrsystem
- 33: erster Strang
- 34: zweiter Strang
- 35a,b: Ventile
- 36: Verbindungsrohr
- 37a,b: Einströmrohre
- 38a,b: Rohrenden
- 39: Rohrverbindung

- 40: Überlauf
- 41: ventilsteuerbare Rohrverbindung

- 50: Gasabscheidungseinrichtung
- 51: Gassammeldom
- 52: Gasablaßvorrichtung
- 53: ventilsteuerbare Rohrverbindung
- 54: Rückhaltevorrichtung

- 60: Reaktorinnenraum
- 61: Reaktionszone
- 62: Beruhigungszone

- 70: Trennvorrichtung
- 71: Durchbrechungen in Trennvorrichtung
- 72: Zwischenboden

- 80: Sinkstoffabscheidungseinrichtung
- 81: Sinkstoffsammelvorrichtung
- 82: Sinkstoffablaßvorrichtung
- 83: ventilsteuerbare Rohrverbindung
- 84: Pumpe
- 85: Ventil

- 90: externe Trennstufe
- 91: Rückführeinrichtung

## Patentansprüche

1. Reaktor zur kontinuierlichen mechanischen und anaerob biologischen Reinigung feststoffhaltigen Abwassers mit Reaktorturm, mindestens einem im unteren Bereich des Reaktorturms angeordneten Zulauf, mindestens einem am oberen Reaktorturmende angeordneten Überlauf, sowie einer am oberen Ende des Reaktorturms angeordneten Gasabscheidungseinrichtung, dadurch gekennzeichnet, daß
zwischen Zulauf (30) und Überlauf (40) eine das Reaktorinnere (60) in eine überstehende Reaktionszone (61) und eine unterhalb befindliche Beruhigungszone (62) teilende Trennvorrichtung (70) vorgesehen ist, wobei die Trennvorrichtung (70) vom Abwasser sowohl von der Beruhigungszone (62) zur Reaktionszone (61) als auch umgekehrt passierbar, von Sinkstoffen jedoch in beiden Richtungen im wesentlichen unpassierbar ist.

2. Reaktor nach Anspruch 1, dadurch gekennzeichnet, daß die Trennvorrichtung (70) ein Durchbrechungen (71) aufweisender Zwischenboden (72) ist.

3. Reaktor nach Anspruch 2, dadurch gekennzeichnet, daß der Zwischenboden (72) ein Glockenboden mit von Glocken überstülpten Stutzen für den Durchtritt des Abwassers ist.

4. Reaktor nach einem der vorhergehenden Ansprüche, dadurch gekennzeichnet, daß der Reaktorturm (20) im wesentlichen eine zylindrische Geometrie aufweist.

5. Reaktor nach einem der vorherigen Ansprüche, dadurch gekennzeichnet, daß die unterhalb der Trennvorrichtung (70) befindliche Beruhigungszone (62) im wesentlichen die Geometrie eines sich nach unten verjüngenden Trichters aufweist.

6. Reaktor nach einem der vorherigen Ansprüche, dadurch gekennzeichnet, daß im unteren Reaktorbereich eine Sinkstoffabscheidungseinrichtung (80) vorgesehen ist.

7. Reaktor nach Anspruch 6, dadurch gekennzeichnet, daß die Sinkstoffabscheidungsvorrichtung (80) eine Sinkstoffsammelvorrichtung (81) und eine Sinkstoffablaßvorrichtung (82) aufweist.

8. Reaktor nach Anspruch 7, dadurch gekennzeichnet, daß die Sinkstoffsammeleinrichtung (81) eine im wesentlichen trichterförmige Gestalt aufweist.

9. Reaktor nach einem der Ansprüche 7 oder 8, dadurch gekennzeichnet, daß die Sinkstoffablaßvorrichtung (82) wenigstens eine ventilsteuerbare Rohrverbindung (83) mit der Sinkstoffsammelvorrichtung (81) aufweist.

10. Reaktor nach Anspruch 9, dadurch gekennzeichnet, daß der ventilsteuerbaren Rohrverbindung (83) mindestens eine Pumpe (84) zum getakteten Abziehen der Sinkstoffe nachgeordnet ist.

11. Reaktor nach einem der vorherigen Ansprüche, dadurch gekennzeichnet, daß die Gasabscheidungseinrichtung (50) einen Gassammeldom (51) und eine Gasablaßvorrichtung (52) aufweist.

12. Reaktor nach Anspruch 11, dadurch gekennzeichnet, daß die Gasablaßvorrichtung (52) wenigstens eine ventilsteuerbare Rohrverbindung (53) mit dem Gassammeldom (51) aufweist.

13. Reaktor nach einem der vorherigen Ansprüche, dadurch gekennzeichnet, daß der Zulauf (30) als zweisträngiges Zufuhrsystem (32) mit den Strängen (33,34) ausgebildet ist, die mit zwei Einströmeinrichtungen (31a, 31b) verbunden sind.

14. Reaktor nach Anspruch 13, dadurch gekennzeichnet, daß die beiden Rohrstränge (33,34) separat über Ventile (35a,35b) ansteuerbar sind.

15. Reaktor nach einem der Ansprüche 13 oder 14, dadurch gekennzeichnet, daß die beiden Rohrstränge (33,34) durch ein Rohr (36) verbunden sind.

16. Reaktor nach einem der Ansprüche 13 bis 15, dadurch gekennzeichnet, daß die Enden (38a,38b) der Einströmrohre (37a,37b), die den Reaktorinnenraum (60) durchqueren, verschließbare Öffnungen aufweisen, die von außen zugänglich sind.

17. Reaktor nach einem der vorherigen Ansprüche, dadurch gekennzeichnet, daß der Überlauf (40) mit dem Zulauf (30) oder dem zweisträngigen Zufuhrsystem (32) durch eine zusätzliche externe Trennstufe (90) miteinander verbunden sind.

18. Reaktor nach Anspruch 17, dadurch gekennzeichnet, daß die Trennstufe (90) luftabgeschlossen ist.

19. Reaktor nach Anspruch 17 oder 18, dadurch gekennzeichnet, daß die Trennstufe (90) ein Zyklon aufweist.

20. Reaktor nach Anspruch 17 oder 18, dadurch gekennzeichnet, daß die Trennstufe (90) ein Abscheidungsbecken aufweist.

21. Reaktor nach einem der Ansprüche 17 bis 20, dadurch gekennzeichnet, daß die Trennstufe (90) eine separate Rückführverbindung (91) mit dem Reaktorturm (20) aufweist.

22. Verfahren zur kontinuierlichen mechanischen und anaerob biologischen Reinigung sinkstoffhaltigen Abwassers in einem UASB-Reaktor mit einer überstehenden Reaktionszone und einer unterhalb befrudlichen Beruhigungszone nach den Ansprüchen 1 bis 21, bei dem sinkstoffhaltiges Abwasser in die Beruhigungszone des Reaktors so eingeströmt wird, daß die Beruhigungszone im wesentlichen frei von Turbulenzen bleibt und die Sinkstoffe in der Beruhigungszone sedimentieren,
das von Sinkstoffen im wesentlichen befreite Abwasser in der Reaktionszone des Reaktors mit Biomasse reagiert, so daß Biomasse, sowie Schweb- und Schwimmstoffe des Abwassers flotieren, wobei der chemische Sauerstoffbedarf (CSB-Wert) des Abwassers verringert wird,
nach der Flotation eine wesentliche Menge der Biomasse von der Flotte getrennt wird,
die Biomasse dem kontinuierlichen Reinigungsprozeß wieder zur Verfügung gestellt wird und
die Flotte mit dem im CSB-Wert verminderten Abwasser isoliert wird.

23. Verfahren nach Anspruch 22, dadurch gekennzeichnet, daß man vor Einströmung des Abwassers in den Reaktor durch Neutralisation, Pufferung, Nährstoffzugabe oder Nährsalzzugabe für die Biomasse günstige Bedingungen schafft.

24. Verfahren nach einem der Ansprüche 22 oder 23, dadurch gekennzeichnet, daß man vor Einströmung des Abwassers in den Reaktor die Temperatur des Abwassers auf zwischen 25 und 40 Grad Celsius einstellt.

25. Verfahren nach einem der Ansprüche 22 bis 24, dadurch gekennzeichnet, daß man die sedimentierten Sinkstoffe periodisch aus dem Reaktorinneren entfernt.

26. Verfahren nach Anspruch 25, dadurch gekennzeichnet, daß man zum periodischen Abziehen der Sinkstoffe mindestens eine einer ventilsteuerbaren Rohrverbindung nachgeordnete Pumpe einsetzt.

27. Verfahren nach einem der Ansprüche 22 bis 26, dadurch gekennzeichnet, daß man den Sinkstoffaustausch zwischen Beruhigungszone und Reaktionszone durch Verwendung einer Trennvorrichtung im wesentlichen ausschließt.

28. Verfahren nach einem der Ansprüche 22 bis 27, dadurch gekennzeichnet, daß man als Biomasse Pellets verwendet, die ein größeres spezifisches Gewicht als Wasser besitzen.

29. Verfahren nach Anspruch 28, dadurch gekennzeichnet, daß die Pellets während der Abwasserreinigung Gas erzeugen.

30. Verfahren nach Anspruch 29, dadurch gekennzeichnet, daß das von den Pellets erzeugte Gas zumindest teilweise als Gashülle den Pellets im zu reinigenden Abwasser Auftrieb verleiht, so daß die reagierten Pellets samt Gashülle im Reaktor nach oben steigen.

31. Verfahren nach Anspruch 30, dadurch gekennzeichnet, daß die Pellets die wesentliche Menge ihrer Gashülle bei Erreichen der Flüssigkeitsoberfläche im Reaktor verlieren und nach unten sinken, während das abgegebene Gas mittels einer Gasabscheidungseinrichtung gesammelt und abgelassen wird.

32. Verfahren nach einem der Anspruch 31, dadurch gekennzeichnet, daß man durch geeignte Trennvorrichtungen verhindert, daß Pellets in die Beruhigungszone zurücksinken.

33. Verfahren nach einem der Ansprüche 22 bis 32, dadurch gekennzeichnet, daß entsprechend der Menge an in den Reaktor einströmendem Abwasser im CSB-Wert vermindertes, schweb- und schwimmstoffhaltiges, im wesentlichen pelletsfreies Abwasser über den Überlauf aus dem Reaktor entfernt wird.

34. Verfahren nach Anspruch 33, dadurch gekennzeichnet, daß der CSB-Wert des Wassers am Überlauf zwischen 10 und 50 % des CSB-Wertes des Wassers am Zulauf beträgt.

35. Verfahren nach Anspruch 34, dadurch gekennzeichnet, daß der CSB-Wert des Wassers am Überlauf zwischen 15 und 40 % des CSB-Wertes des Wassers am Zulauf beträgt.

36. Verfahren nach Anspruch 35, dadurch gekennzeichnet, daß der CSB-Wert des Wassers am Überlauf zwischen 20 und 30 % des CSB-Wertes des Wassers am Zulauf beträgt.

37. Verfahren nach Anspruch 33, dadurch gekennzeichnet, daß im CSB-Wert vermindertes, pellets-, schweb- und schwimmstoffhaltiges Abwasser der Trennung in einer mechanischen Trennstufe unterzogen wird, wobei die Anaerobie während des gesamten Vorgangs aufrechterhalten wird.

38. Verfahren nach Anspruch 37, dadurch gekennzeichnet, daß man die in der Trennstufe abgetrennten Pellets wieder in den Reaktor einleitet und das im CSB-Wert verminderte, schweb- und schwimmstoffhaltige Abwasser dem weiteren Bearbeitungsprozeß zuführt.

## Claims

1. Reactor for the continous mechanical and anaerobic biological purification of waste water containing solids, said reactor comprising a tower, at least one inlet disposed in the lower section of the reactor tower, at least one overflow disposed at the upper end of the reactor tower, as well as a gas separation device disposed at the upper end of the reactor tower, characterized in that,
between the inlet (30) and the overflow (40), a separator (70) is provided subdividing the inside of the reactor (60) into a reaction zone (61) being above and into a smoothing zone (62) being underneath, the separator (70) being traversable by the waste water both, from the smoothing zone (62) towards the reaction zone (61) and conversely, however, being essentially non-traversable in both directions by suspended matter.

2. Reactor according to claim 1, characterized in that the separator (70) is an intermediate bottom (72) comprising openings (71).

3. Reactor according to claim 2, characterized in that the intermediate bottom (72) is a bubble tray having connection pieces covered up by bubble caps in order to execute the passage of waste water.

4. Reactor according to anyone of the previous claims, characterized in that the reactor tower (20) has an essentially cylindrical shape.

5. Reactor according to anyone of the previous claims, characterized in that the smoothing zone (62) disposed underneath the separator (70) has essentially the shape of a funnel tapering downwards.

6. Reactor according to anyone of the previous claims, characterized in that a device for the separation of suspended matter (80) is provided in the lower section of the reactor.

7. Reactor according to claim 6, characterized in that the device for the separation of the suspended matter (80) comprises a collecting device for suspended matter (81) and an outlet device for suspended matter (82).

8. Reactor according to claims 7, characterized in that the collecting device for the suspended matter (81) has an essentially funnel-shaped form.

9. Reactor according to one of claims 7 or 8, characterized in that the outlet device for the suspended matter (82) shows at least one valve-controllable tube joint (83) with the collecting device for the suspended matter (81).

10. Reactor according to claim 9, characterized in that at least one pump (84) is installed after the valve-controllable tube joint (83) for a pulsed discharge of the suspended matter.

11. Reactor according to anyone of the previous claims, characterized in that the gas separation device (50) comprises a gas collecting dome (51) and a gas outlet device (52).

12. Reactor according to claim 11, characterized in that the gas outlet device (52) comprises at least one valve-controllable tube joint (53) with the gas collecting dome (51).

13. Reactor according to anyone of the previous claims, characterized in that the inlet (30) is developed as a two-duct feed system (32) having the ducts (33, 34) being connected with two admission devices (31a, 31b).

14. Reactor according to claim 13, characterized in that the two tubings (33, 34) can be separatedly charged via the valves (35a, 35b).

15. Reactor according to one of claims 13 or 14, characterized in that the two tubings (33, 34) are connected by a tube (36).

16. Reactor according to one of claims 13 to 15, characterized in that the ends (38a, 38b) of the admission tubes (37a, 37b) passing through the interior of the reactors (60) comprise openings that can be closed and that are accessible from the outside.

17. Reactor according to anyone of the previous claims, characterized in that the overflow (40) is connected with the inlet (30) or with the two-duct feed system (32) by means of an additional external separation stage (90).

18. Reactor according to claim 17, characterized in that the separation stage (90) is air-sealed.

19. Reactor according to claims 17 or 18, characterized in that the separation stage (90) comprises a cyclone.

20. Reactor according to claims 17 or 18, characterized in that the separation stage (90) comprises a separation basin.

21. Reactor according to one of claims 17 to 20, characterized in that the separation stage (90) comprises a separate recirculating connection (91) with the reactor tower (20).

22. Process for the continous mechanical and anaerobic biological purification of waste water containing suspended matter in an UASB-reactor having a reaction zone disposed above and a smoothing zone disposed underneath according to claims 1 to 21, wherein waste water containing suspended matter is introduced into the smoothing zone of the reactor thus that said smoothing zone remains essentially free from turbulences and that the suspended matter in the smoothing zone will be deposited,
the waste water being essentially free of suspended matter reacts in the reaction zone of the reactor so that the biomass as well as the settable matter and the floating matter of the waste water are floated, the chemical oxygen demand (COD) of the waste water being thereby reduced,
an essential amount of the biomass is separted from the liquor after flotation,
the biomass is again made available for the continuous purification process and
the liquor is isolated together with the waste water being reduced by the COD-value.

23. Process according to claim 22, characterized in that, prior to the introduction of the waste water into the reactor, favorable conditions are provided by neutralization, buffering, addition of nutrients or nutrient salts.

24. Process according to one of claims 22 or 23, characterized in that, before the introduction of the waste water into the reactor, the temperature of the waste water is adjusted to a value between 25 and 40° C.

25. Process according to one of claims 22 to 24, characterized in that the deposited suspended matter is periodically removed from the interior of the reactor.

26. Process according to claim 25, characterized in that, for the periodical discharge of the suspended matter, at least one pump is utilized being disposed after a valve-controllable tube connection.

27. Process according to one of claims 22 to 26, characterized in that an exchange of suspended matter between the smoothing zone and reaction zone is essentially excluded in utilizing a separator.

28. Process according to one of claims 22 to 27 characterized in that pellets are used as the biomass, said pellets having a specific gravity higher than water.

29. Process according to claim 28, characterized in that the pellets produce gas in the course of water purification.

30. Process according to claim 29, characterized in that, in the waste water to be purified, buoyancy is imparted to the pellets by gas produced by the pellets which envelopes at least partially said pellets so as to cause the reacted pellets to ascent in the reactor together with their gas envelope.

31. Process according to claim 30, characterized in that, after having reached the surface of the liquid, the pellets lose the essential amount of their gas envelope in the reactor and sink downwards, whereas the released gas is collected by means of a gas separation device and is deflated.

32. Process according to claim 31, characterized in that, by providing suitable separators, the pellets are prevented to sink into the smoothing zone.

33. Process according to one of claims 22 to 32, characterized in that, in accordance with the amount of waste water being introduced into the reactor, waste water is removed from the reactor via the overflow, said waste water being reduced by its COD-value, having settable and floating matter and being essentially free from pellets.

34. Process according to claim 33, characterized in that the COD-value of the water at the overflow amounts to about 10 to 50% of the COD-value of the water at the inlet.

35. Process according to claim 34, characterized in that the COD-value of the water at the overflow amounts to between 15 and 40% of the COD-value of the water at the inlet.

36. Process according to claim 35, characterized in that the COD-value of the water at the overflow amounts to between 20 and 30% of the COD-value of the water at the inlet.

37. Process according to claim 33, characterized in that waste water being reduced by its COD-value and having pellets and settable and floating matter is subjected to a separation in a mechanical separation stage, the anaerobic conditions being maintained during the entire process.

38. Process according to claim 37, characterized in that the pellets separated in the separating stage are again introduced in the reactor and in that the waste water being reduced by its COD-value and having settable and floating matter is supplied to a further treatment.

## Revendications

1. Réacteur pour la purification mécanique et biologique anaérobie continue d'eau usée contenant des matières solides, ledit réacteur comportant une tour de réacteur, au moins une entrée disposée à la zone inférieure de la tour de réacteur, au moins un déversoir disposé au bout supérieur de la tour de réacteur, ainsi qu'un dispositif de dégazage disposé au bout supérieur de la tour de réacteur, caractérisé en ce que,
entre l'amenée (30) et le déversoir (4), on a prévu un dispositif de séparation (70) subdivisant l'intérieur du réacteur (60) en une zone de réaction (61) disposé en 'haut et une zone d'apaisement (62) disposée en bas, ledit dispositif de séparation (70) étant traversable par les eaux usées non seulement de la zone d'apaisement (62) à la zone de réaction (61), mais aussi en sens inverse, mais étant essentiellement impraticable dans les deux directions pour les matières en suspension.

2. Réacteur d'après la revendication 1, caractérisé en ce que le dispositif de séparation (70) est un fond intermédiaire (72) comportant des débouchages (71).

3. Réacteur d'après la revendication 2, caractérisé en ce que le fond intermédiaire (72) est un plateau à cloches ayant des tubulures couvertes de cloches pour la traversée de l'eau usée.

4. Réacteur d'après une des revendications précédentes, caractérisé en ce que la tour de réacteur (20) montre essentiellement une forme cylindrique.

5. Réacteur d'après une des revendications précédentes, caractérisé en ce que la zone d'apaisement (62) située au-dessous du dispositif de séparation (70) montre essentiellement la forme d'un entonnoir qui diminue vers le bas.

6. Réacteur d'après une des revendications précédentes, caractérisé en ce que, dans la zone inférieure du réacteur, on a prévu un dispositif pour la précipitation de la matière en suspension (80).

7. Réacteur d'après la revendication 6, caractérisé en ce que le dispositif pour la précipitation de matières en suspension (80) comporte un dispositif collecteur de matières en suspension (81) et un dispositif pour la décharge de matières en suspension (82).

8. Réacteur d'après la revendication 7, caractérisé en ce que le dispositif collecteur de matières en suspension (81) est essentiellement développé sous la forme d'un entonnoir.

9. Réacteur d'après une des revendications 7 ou 8, caractérisé en ce que le dispositif pour la décharge de matières en suspension (82) comporte au moins un raccord à tubes (83) associé au dispositif collecteur de matières en suspension (81), dont on peut diriger l'admission au moyen de soupapes .

10. Réacteur d'après la revendication 9, caractérisé en ce que, après le raccord à tubes (83) dont on peut diriger l'admission au moyen de soupapes, on a installé au moins une pompe (84) pour la décharge cadencée des matières en suspension.

11. Réacteur d'après une des revendications précédentes, caractérisé en ce que le dispositif de dégazage (50) comporte un dôme collecteur de gaz (51) et un dispositif d'évacuation de gaz (52).

12. Réacteur d'après la revendication 11, caractérisé en ce que le dispositif d'évacuation de gaz (52) comporte au moins un raccord à tubes (53) avec le dôme collecteur de gaz (51) dont on peut diriger l'admission au moyen de soupapes.

13. Réacteur d'après une des revendications précédentes, caractérisé en ce que l'entrée (30) est développée en tant que système d'amenage à deux lignes (32) et comportant les lignes (33, 34) raccordées à deux dispositifs d'admission (31a, 35b).

14. Réacteur d'après la revendication 13, caractérisé en ce que l'on peut particulièrement diriger l'admission des deux lignes de tubes (33, 34) au moyen de soupapes (35a, 35b).

15. Réacteur d'après une des revendications 13 ou 14, caractérisé en ce que les deux lignes de tubes (33, 34) sont raccordées au moyen d'un tuyau (36).

16. Réacteur d'après une des revendications 13 à 15, caractérisé en ce que les bouts (38a, 38b) des tubes d'admission (37a, 37b) traversant l'intérieur du réacteur (60) montrent des ouvertures obturables qui sont accessibles de l'extérieur.

17. Réacteur d'après une des revendications précédentes, caractérisé en ce que le déversoir (40) est raccordé à l'entrée (30) ou au système d'amenage à deux lignes (32) par un étage séparateur externe supplémentaire (90).

18. Réacteur d'après la revendication 17, caractérisé en ce que l'étage séparateur (90) est imperméable à l'air.

19. Réacteur d'après la revendication 17 ou 18, caractérisé en ce que l'étage séparateur (90) comporte un cyclone.

20. Réacteur d'après la revendication 17 ou 18, caractérisé en ce que l'étage séparateur (90) comporte un bassin de sédimentation.

21. Réacteur d'après une des revendications 17 à 20, caractérisé en ce que l'étage séparateur (90) comporte un raccordement de récyclage séparé (91) à la tour de réacteur (20).

22. Procédé pour la purification mécanique et biologique anaerobie continue d'eau usée contenant des matières solides dans un réacteur anaérobie en lit de boue (réacteur UASB) comportant une zone de réaction (61) disposé en 'haut et une zone d'apaisement (62) disposée en bas, d'après les revendications 1 à 21, dans lequel
on admet d'eau usée contenant des matières en suspension dans la zone d'apaisement du réacteur si, que la zone d'apaisement reste essentiellement exempt de turbulences et les matières en suspension se déposent dans la zone d'apaisement,
l'eau usée, qui est essentiellement libérée des matières en suspension, réagit avec la biomasse dans la zone de réaction du réacteur si, que la biomasse aussi bien que des matières suspendues et surnageantes de l'eau usée sont flottées, à l'occasion de quoi la demande chimique d'oxygène (D.C.O.) de l'eau usée est réduite,
une quantité essentielle de la biomasse est séparée du liquide après sa flottation,
la biomasse est remise à la disposition du procéde de purification continue, et
le liquide comportant l'eau usée réduite en ce qui concerne sa valeur D.C.O. est isolé.

23. Procédé d'après la revendication 22, caractérisé en ce que, avant l'admission de l'eau usée dans le réacteur, au moyen de neutralisation, tamponnage, addition de substances nutritives ou sel nutritif, on veille à ce que la biomasse ait des conditions favorables.

24. Procédé d'après une des revendications 22 ou 23, caractérisé en ce que, avant l'admission de l'eau usée dans le réacteur, on ajuste la température de l'eau usée à la fourchette entre 25 et 40 degrés Celsius.

25. Procédé d'après une des revendications 22 à 24, caractérisé en ce que l'on enlève les matières suspendues déposées périodiquement de l'intérieur du réacteur.

26. Procédé d'après la revendication 25, caractérisé en ce que l'on utilise au moins une pompe pour la décharge périodique des matières en suspension, ladite pompe étant installée après un raccordement à tubes (83) dont on peut diriger l'admission au moyen de soupapes.

27. Procédé d'après une des revendications 22 à 26, caractérisé en ce que l'on exclut essentiellement l'échange de la matière en suspension entre la zone d'apaisement et la zone de réaction en utilisant une dispositif de séparation.

28. Procédé d'après une des revendications 22 à 27, caractérisé en ce que l'on utilise des boulettes en tant que biomasse qui présentent un poids volumique plus élevé comparé à l'eau.

29. Procédé d'après la revendication 28, caractérisé en ce que les boulettes produisent de gaz au cours de la purification.

30. Procédé d'après la revendication 29, caractérisé en ce que le gaz produit par les boulettes donne aux boulettes une force ascensionelle, pour le moins en tant qu'enveloppe gazeuse dans l'eau usée qu'il faut purifier, si, que les boulettes qui ont réagi et sont accompagnées de son enveloppe gazeuse sont entrainées vers la haut.

31. Procédé d'après la revendication 30, caractérisé en ce que, parvenu à la surface de liquide, les boulettes perdent la quantité essentielle de son enveloppe gazeuse dans le réacteur et descendent vers le bas, tandis que le gaz cédé est accumulé au moyen d'un dispositif de dégazage et est évacué.

32. Procédé d'après la revendication 31, caractérisé en ce que, au moyen de dispositifs de séparation appropriés, on empèche les boulettes qu'elles redescendent dans la zone d'apaisement.

33. Procédé d'après une des revendications 22 à 32, caractérisé en ce que, correspondant à la quantité de l'eau usée affluant dans la réacteur, de l'eau usée réduite en ce qui concerne la valeur D.C.O. et contenant des matières suspendues et surnageantes mais essentiellement exempt de boulettes est enlevée du réacteur par la voie du déversoir.

34. Procédé d'après la revendication 33, caractérisé en ce que la valeur D.C.O. de l'eau au déversoir se chiffre à la fourchette entre 10 et 50% de la valeur D.C.O. de l'eau à l'entrée.

35. Procédé d'après la revendication 34, caractérisé en ce que la valeur D.C.O. de l'eau au déversoir se chiffre à la fourchette entre 15 et 40% de la valeur D.C.O. de l'eau à l'entrée.

36. Procédé d'après la revendication 35, caractérisé en ce que la valeur D.C.O. de l'eau au déversoir se chiffre à la fourchette entre 20 et 30% de la valeur D.C.O. de l'eau à l'entrée.

37. Procédé d'après la revendication 33, caractérisé en ce que de l'eau usée, réduite en ce qui concerne la valeur D.C.O. et contenant des matières suspendues et surnageantes mais exempt de boulettes, est sousmise à la séparation dans un étage séparateur mécanique, à l'occasion de quoi on maintient les conditions anaérobies pendant tout le processus.

38. Procédé d'après la revendication 33, caractérisé en ce que l'on introduit de noveau les boulettes séparées dans l'étage séparateur dans le réacteur et on alimente l'eau usée, réduite en ce qui concerne la valeur D.C.O. et contenant des matières suspendues et surnageantes mais exempt de boulettes, au processus du traitement suivant.
